# EUROPEAN PATENT SPECIFICATION

(11) **EP 3 190 037 B1**
(45) Date of publication and mention of the grant of the patent: **13.03.2019**
(21) Application number: 16199066.8
(22) Date of filing: 16.11.2016
(51) Int. Cl.: B62K 11/10, B62J 35/00, B62K 19/10

(54) **STRADDLED VEHICLE**
GRÄTSCHSITZFAHRZEUG
VÉHICULE À CHEVAUCHER

(30) Priority: 06.01.2016 JP 2016001211
(43) Date of publication of application: 12.07.2017
(73) Proprietor: Yamaha Hatsudoki Kabushiki Kaisha, Iwata-shi, Shizuoka 438-8501 (JP)
(72) Inventor: SAITO, Yusuke, Iwata-shi, Shizuoka 438-8501 (JP)
(74) Representative: Grünecker Patent- und Rechtsanwälte PartG mbB

(56) References cited:
- FR-A1- 2 734 232
- JP-A- 2002 068 064
- US-A- 5 433 286

## Description

The present invention relates to a straddled vehicle according to the preamble of independent claim 1. Such a straddled vehicle can be taken from the prior art document JP 2002-068064 A.

Straddled vehicles include a vehicle body frame composed of pipes. For example, Japan Laid-open Patent Application Publication No. 2000-229593 describes a straddled vehicle including a head pipe, a down frame portion, a lower frame portion and a seat frame portion. The down frame portion extends downward from the head pipe. The lower frame portion extends rearward from the down frame portion. The seat frame portion extends rearward and upward from the lower frame portion.

Additionally, the straddled vehicle described in Japan Laid-open Patent Application Publication No. 2000-229593 includes a center tunnel portion in the middle of a foot board. The center tunnel portion extends in a vehicle back-and-forth direction. A coupling frame portion is disposed within the center tunnel portion. The coupling frame portion extends in the vehicle back-and-forth direction and couples the down frame portion and the seat frame portion. In general, these frame portions are made of pipes for reliably achieving required strength and stiffness.

With the coupling frame portion, the aforementioned straddled vehicle can be enhanced in vertical stiffness. For example, in the vehicle body frame, the vertical stiffness refers to stiffness against deformation to be caused when a load downwardly acts on the vehicle body frame.

However, the stiffness of the vehicle encompasses not only the longitudinal stiffness but also transverse stiffness and torsional stiffness. For example, in the vehicle body frame, the transverse stiffness refers to stiffness against deformation to be caused when a load acts on the vehicle body frame in a vehicle width direction. For example, in the vehicle body frame, the torsional stiffness refers to stiffness against deformation to be caused when loads act on right and left lateral portions of the vehicle body frame in opposite up-and-down directions, in other words, when loads act on the vehicle body frame so as to twist the vehicle body frame.

The aforementioned coupling frame portion made of a pipe can adjust the stiffness of the vehicle by adjusting the pipe diameter and the pipe thickness. Therefore, for the purpose of enhancing the longitudinal stiffness of the vehicle, it is only required to increase the pipe diameter and the pipe thickness of the coupling frame portion. In this case, however, not only the longitudinal stiffness but also the transverse stiffness and the torsional stiffness are increased.

When the vehicle corners in a high vehicle speed range, high transverse stiffness makes a rider have a comfortable riding experience. However, when the vehicle corners in low and middle vehicle speed ranges, high transverse stiffness makes a rider have a hard riding experience, and in other words, it is difficult to make a rider have a comfortable riding experience.

Thus, for the purpose of making a rider have a comfortable riding experience, it is important to appropriately tune the longitudinal stiffness, the transverse stiffness and the torsional stiffness in designing the vehicle. However, it takes some effort to appropriately tune the longitudinal stiffness, the transverse stiffness and the torsional stiffness, respectively, in the coupling frame portion made of a pipe.

Additionally, the coupling frame portion is connected to the down frame portion, the seat frame portion and so forth. The coupling frame portion is required to be enlarged for reliably achieving high strength in the portions connected to the down frame portion, the seat frame portion and so forth. However, for the purpose of enlarging the coupling frame portion made of a pipe, it is required to increase the pipe diameter of the coupling frame portion. In this case, the pipe diameter is inevitably increased not only in the connected portions but also in the entirety of the coupling frame portion. Hence, the stiffness is likely to be excessively high. In other words, it is not easy to reliably achieve high strength in the coupling frame portion, and simultaneously, to regulate stiffness appropriately.

It is an object of the present invention to provide a straddled vehicle in which high strength can be reliably achieved in a coupling frame portion and vehicle stiffness can be easily tuned.

According to the present invention said object is solved by a straddled vehicle having the features of independent claim 1. Preferred embodiments are laid down in the dependent claims.

A straddled vehicle according to an aspect includes a head pipe, a down frame portion, a rear frame portion, a seat and a coupling frame portion. The down frame portion extends downward from the head pipe. The rear frame portion is disposed rearward of a front end of the down frame portion, and includes a lower frame portion and a seat frame portion. The lower frame portion extends rearward from the down frame portion at a lower position than the head pipe. The seat frame portion extends rearward and upward from the lower frame portion. At least part of the seat is disposed over the seat frame portion. The seat is a constituent element on which a rider is seated. The coupling frame portion extends in a vehicle back-and-forth direction at a higher position than the lower frame portion, and couples the down frame portion and the rear frame portion. The coupling frame portion is made of sheet metal and includes a transverse plate portion and a longitudinal plate portion. The transverse plate portion extends in a vehicle width direction. The longitudinal plate portion extends in an up-and-down direction.

In the straddled vehicle according to the present aspect, the coupling frame portion is made of sheet metal, and includes the transverse plate portion extending in the vehicle width direction and the longitudinal plate portion extending in the up-and-down direction. Therefore, the shape and dimensions of the transverse plate portion and those of the longitudinal plate portion can be easily changed. Accordingly, the stiffness of the vehicle can be easily tuned. For example, by enlarging the longitudinal plate portion in the up-and-down direction, increase in transverse stiffness can be inhibited, while increase in longitudinal stiffness can be achieved. Alternatively, by enlarging the transverse plate portion in the vehicle width direction, increase in longitudinal stiffness can be inhibited, while increase in torsional stiffness can be achieved.

Additionally, unlike a coupling frame portion made of pipe, the coupling frame portion made of sheet metal can be easily formed in a shape that each of the transverse plate portion and the longitudinal plate portion includes a portion sized differently from the rest. Therefore, the strength of the coupling frame portion can be reliably kept high in the portions connected to the down frame portion and the rear frame portion, while the stiffness of the entire coupling frame portion can be easily inhibited from being excessively high.

A vehicle width directional dimension of the transverse plate portion may be larger than an up-and-down directional dimension of the longitudinal plate portion. In this case, increase in transverse stiffness can be inhibited. Accordingly, comfortableness in riding the vehicle can be enhanced, for instance, when the vehicle corners in low and middle vehicle speed ranges.

The coupling frame portion may include a first joint portion and a second joint part. The first joint portion is joined to the down frame portion. The second joint portion is joined to the rear frame portion. The transverse plate portion may include a transverse body. The transverse body is located between the first joint portion and the second joint part. A vehicle width directional dimension of the transverse body may be different from either or both of vehicle width directional dimensions of the first and second joint portions.

In this case, the vehicle width directional dimension of the transverse body can be set without being limited by either or both of the vehicle width directional dimensions of the first and second joint portions required for reliably achieving sufficient joint strength. Accordingly, transverse stiffness can be easily tuned.

The transverse body may include portions having vehicle width directional dimensions different from each other. In this case, transverse stiffness can be easily tuned by partially changing the vehicle width directional dimension of the transverse body.

The longitudinal plate portion may include a longitudinal body, The longitudinal body is located between the first joint portion and the second joint portion. An up-and-down directional dimension of the longitudinal body may be different from either or both of up-and-down directional dimensions of the first and second joint portions.

In this case, the up-and-down directional dimension of the longitudinal body can be set without being limited by either or both of the up-and-down directional dimensions of the first and second joint portions required for reliably achieving sufficient joint strength. Accordingly, longitudinal stiffness can be easily tuned.

The longitudinal body may include portions having up-and-down directional dimensions different from each other. In this case, longitudinal stiffness can be easily tuned by partially changing the up-and-down directional dimension of the longitudinal body.

The coupling frame portion may include a hole. In this case, longitudinal stiffness, transverse stiffness and torsional stiffness can be easily tuned by adjusting the size, shape and position of the hole.

The hole may be provided in the transverse plate portion. In this case, transverse stiffness can be easily tuned.

The hole may be provided in the longitudinal plate portion. In this case, longitudinal stiffness can be easily tuned.

The hole may have a circular shape. In this case, longitudinal stiffness, transverse stiffness and torsional stiffness can be tuned by the shape of the hole.

The hole may have a shape elongated in the vehicle back-and-forth direction. In this case, longitudinal stiffness, transverse stiffness and torsional stiffness can be tuned by the shape of the hole.

The hole may be provided with a rib on an edge thereof. In this case, degradation in strength can be inhibited, while stiffness can be tuned.

The coupling frame portion may be tilted with respect to the vehicle back-and-forth direction in a vehicle side view. In this case, stiffness can be tuned by adjusting the posture of the coupling frame portion.

The straddled vehicle may further include a gusset portion. The gusset portion is attached across the head pipe and the down frame portion. The coupling frame portion may be connected to the down frame portion at a higher position than a lower end of the gusset portion. In this case, stiffness against an input from the head pipe can be enhanced.

According to the invention, the straddled vehicle further includes a left floor step portion, a right floor step portion, a center tunnel portion and a fuel tank. The left floor step portion is disposed leftward of the head pipe and in a lower position than the coupling frame. At least portion of the left floor step portion is located between a rear end of the head pipe and a front end of the seat in the vehicle back-and-forth direction. The right floor step portion is disposed rightward of the head pipe and in a lower position than the coupling frame. At least portion of the right floor step portion is located between the rear end of the head pipe and the front end of the seat in the vehicle back-and-forth direction. The center tunnel portion is disposed between the left floor step portion and the right floor step portion in the vehicle width direction. The center tunnel portion has a cross-section made in an upwardly bulging convex shape, and extends in the vehicle back-and-forth direction. The fuel tank is disposed under the coupling frame portion within the center tunnel portion. The coupling frame is disposed within the center tunnel portion. A vehicle width directional dimension of the coupling frame portion is smaller than a vehicle width directional dimension of the fuel tank in a vehicle plan view.

In this case, the vehicle width directional dimension of the coupling frame portion is small, and hence, increase in width of the center tunnel portion can be prevented. Accordingly, spaces for putting the feet of a rider can be extended on the right and left of the center tunnel portion, and thereby, comfortableness of the rider can be enhanced.

The transverse plate portion may include a hole. The fuel tank may include a tank body and a filler portion. The tank body includes an internal space for storing a fuel. The filler portion upwardly protrudes from the tank body. The filler portion may be disposed through the hole.

In this case, interference between the coupling frame portion and the filler portion can be avoided, and simultaneously, required transverse stiffness can be reliably achieved in the rest of the transverse plate portion other than the hole.

The coupling frame portion may have a cross-section made in an upwardly bent convex shape in a cross-sectional view perpendicular to the vehicle back-and-forth direction. In this case, transverse stiffness, longitudinal stiffness and torsional stiffness can be easily tuned,

The longitudinal plate portion may include a left longitudinal plate portion and a right longitudinal plate portion. The left longitudinal plate portion downwardly extends from a left lateral edge of the transverse plate portion. The right longitudinal plate portion downwardly extends from a right lateral edge of the transverse plate portion. In this case, longitudinal stiffness can be easily tuned.

The seat frame portion may include a left seat frame portion and a right seat frame portion. The left seat frame portion is disposed leftward of the head pipe. The right seat frame portion is disposed rightward of the head pipe. The rear frame portion may include a connecting member connecting the left seat frame portion and the right seat frame portion. The coupling frame portion may couple the down frame portion and the connecting member. In this case, the coupling frame portion can be easily disposed in a desired position.

### BRIEF DESCRIPTION OF THE DRAWINGS

FIG. 1 is a side view of a straddled vehicle according to a preferred embodiment.
FIG. 2 is a perspective view of a vehicle body frame.
FIG. 3 is a perspective view of the vehicle body frame.
FIG. 4 is a side view of the vehicle body frame.
FIG. 5 is a plan view of the vehicle body frame.
FIG. 6 is a cross-sectional view of FIG. 1 taken along line VI-VI.
FIG. 7 is a perspective view of a coupling frame portion.
FIG. 8 is a plan view of the coupling frame portion.
FIG. 9 is a side view of the coupling frame portion.
FIG. 10 is a cross-sectional view of FIG. 8 taken along line X-X.
FIG. 11 is a cross-sectional view of FIG. 8 taken along line Xl-XI.
FIG. 12 is an enlarged plan view of the coupling frame portion and its surroundings.
FIG. 13 is a perspective view of a coupling frame portion according to another preferred embodiment.
FIG. 14 is a perspective view of a vehicle body frame according to the aforementioned another preferred embodiment.

### DETAILED DESCRIPTION OF THE PREFERRED EMBODIMENTS

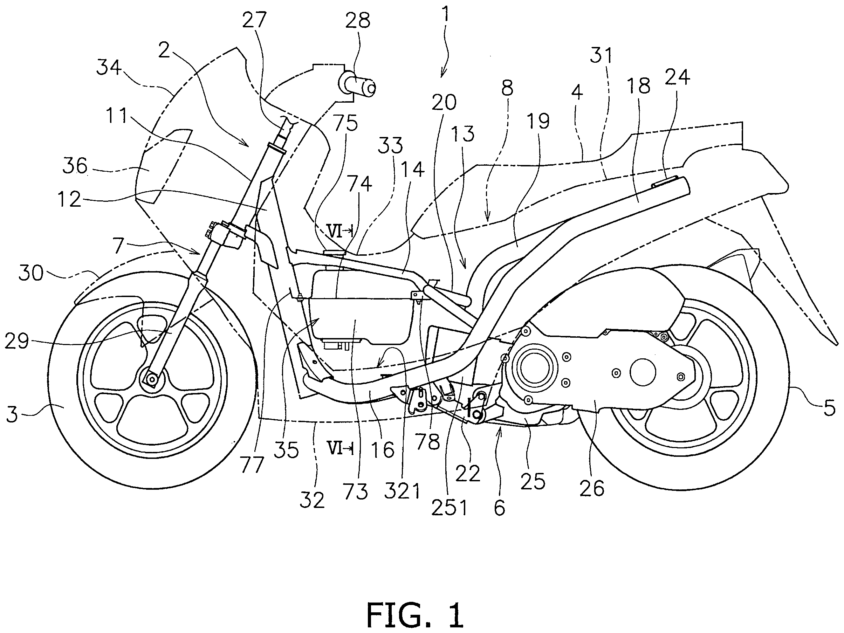

A straddled vehicle 1 according to a preferred embodiment will be hereinafter explained with reference to drawings. FIG. 1 is a side view of the straddled vehicle 1. The straddled vehicle 1 according to the present preferred embodiment is a scooter-type vehicle.

It should be noted that in the present specification, a back-and-forth direction of the straddled vehicle 1, an up-and-down direction of the straddled vehicle 1 and a right-and-left direction of the straddled vehicle 1 refer to a back-and-forth direction, an up-and-down direction and a right-and-left direction seen from a rider on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction.

Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

As shown in FIG. 1, the straddled vehicle 1 includes a vehicle body frame 2, a front wheel 3, a seat 4, a rear wheel 5, a power unit 6, a steering device 7 and a vehicle body cover 8. It should be noted that FIG. 1 depicts the vehicle body cover 8 and the seat 4 with dashed two-dotted lines.

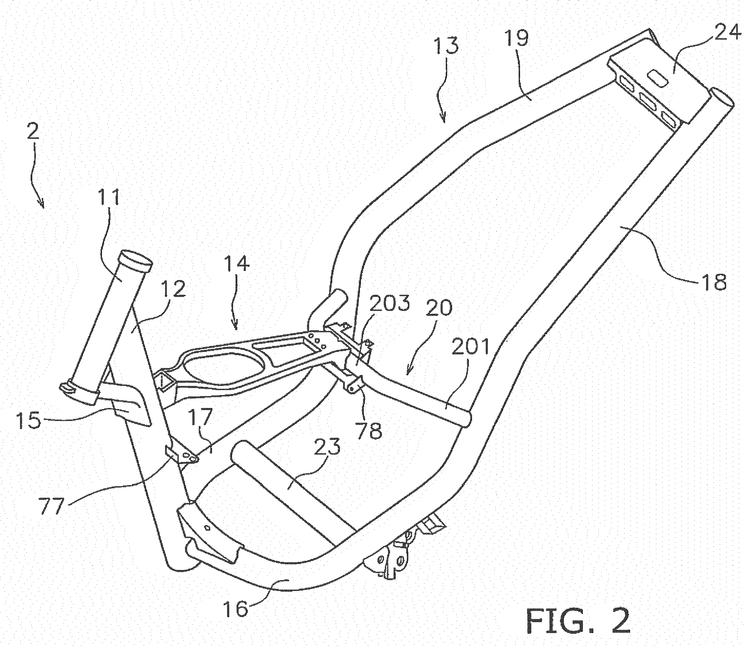

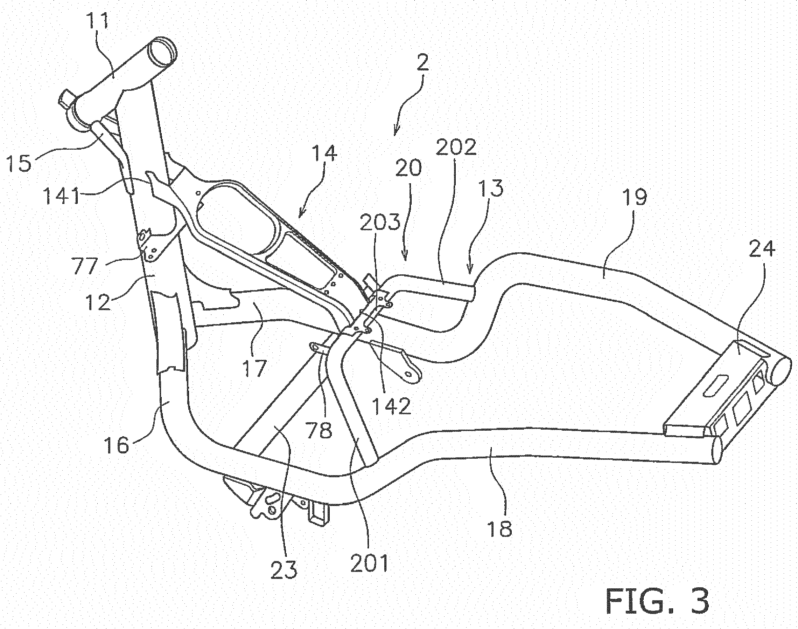

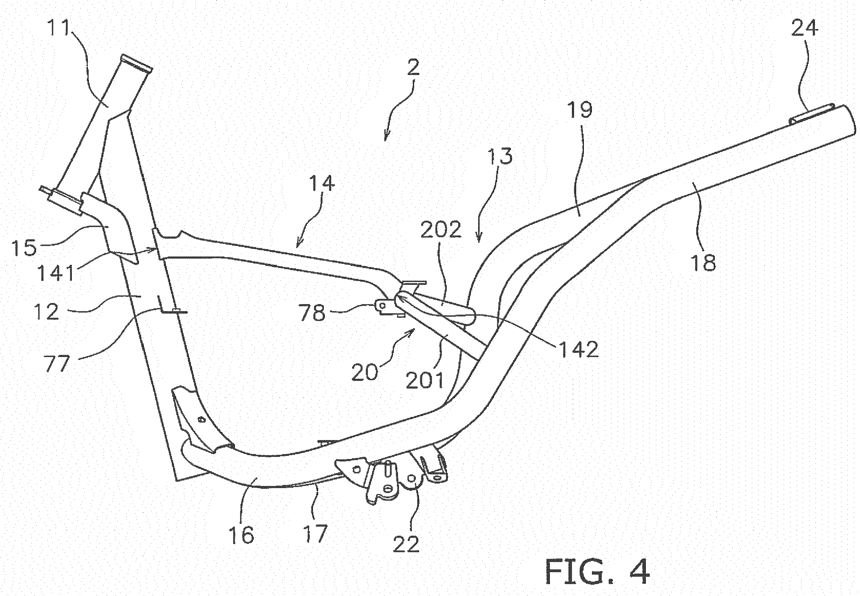

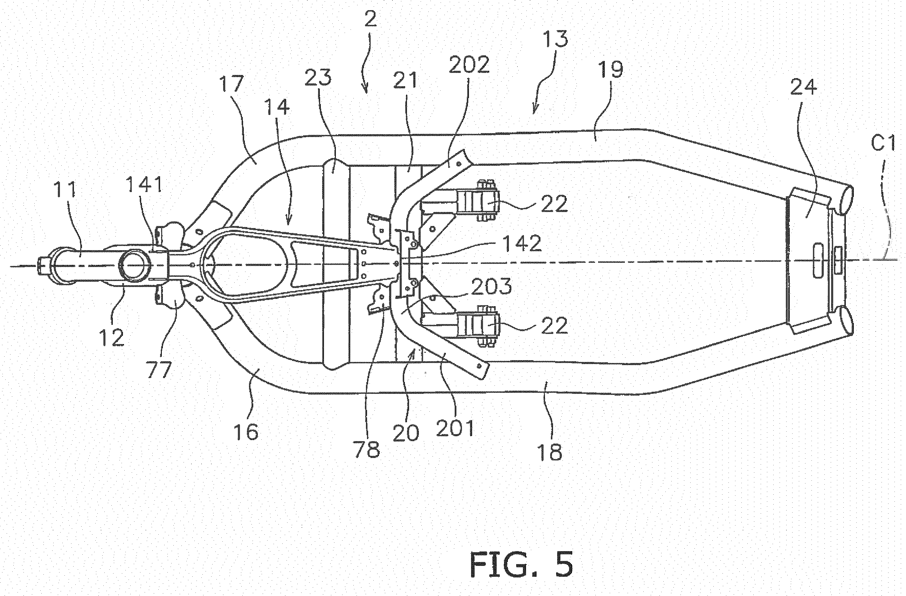

FIGS. 2 and 3 are perspective views of the vehicle body frame 2. FIG. 4 is a side view of the vehicle body frame 2. FIG. 5 is a plan view of the vehicle body frame 2. The vehicle body frame 2 includes a head pipe 11, a down frame portion 12, a rear frame portion 13 and a coupling frame portion 14. The down frame portion 12 extends downward from the head pipe 11. A gusset portion 15 is attached to the head pipe 11 and the down frame portion 12. The gusset portion 15 extends between the head pipe 11 and the down frame portion 12.

The rear frame portion 13 is disposed rearward of the front end of the down frame portion 12. The rear frame portion 13 includes lower frame portions 16 and 17, seat frame portions 18 and 19, and a connecting member 20. The lower frame portions 16 and 17 are connected to a lower portion of the down frame portion 12. The lower frame portions 16 and 17 extend rearward from the down frame portion 12 in a lower position than the head pipe 11.

The lower frame portions 16 and 17 include a left lower frame portion 16 and a right lower frame portion 17. The left lower frame portion 16 is disposed leftward of the head pipe 11. The left lower frame portion 16 is connected to the lower portion of the down frame portion 12. The left lower frame portion 16 extends obliquely leftward to the rear from the down frame portion 12 and bends rearward. The right lower frame portion 17 is disposed rightward of the head pipe 11. The right lower frame portion 17 is connected to the lower portion of the down frame portion 12. The right lower frame portion 17 extends obliquely rightward to the rear from the down frame portion 12 and bends rearward.

As shown in FIG. 5, the left lower frame portion 16 and the right lower frame portion 17 are coupled by a first cross frame portion 21. The first cross frame portion 21 extends in the vehicle width direction. The power unit 6 is attached to the first cross frame portion 21 through link members 22,

The left lower frame portion 16 and the right lower frame portion 17 are coupled by a second cross frame portion 23. The second cross frame portion 23 extends in the vehicle width direction. The second cross frame portion 23 is disposed forward of the first cross frame portion 21.

The seat frame portions 18 and 19 are respectively connected to rear portions of the lower frame portions 16 and 17. The seat frame portions 18 and 19 respectively extend rearward and upward from the lower frame portions 16 and 17. The seat frame portions 18 and 19 include a left seat frame portion 18 and a right seat frame portion 19.

The left seat frame portion 18 is disposed leftward of the head pipe 11. The left seat frame portion 18 is connected to the rear portion of the left lower frame portion 16. The left seat frame portion 18 extends rearward and upward from the left lower frame portion 16. The right seat frame portion 19 is disposed rightward of the head pipe 11. The right seat frame portion 19 is connected to the rear portion of the right lower frame portion 17. The right seat frame portion 19 extends rearward and upward from the right lower frame portion 17. A rear portion of the left seat frame portion 18 and that of the right seat frame portion 19 are coupled by a cross member 24.

The connecting member 20 connects the left seat frame portion 18 and the right seat frame portion 19. As shown in the vehicle plan view of FIG. 5, at least portion of the connecting member 20 overlaps with the first cross frame portion 21. At least portion of the connecting member 20 is located over the lower frame portions 16 and 17. The connecting member 20 includes a left support portion 201, a right support portion 202 and a middle portion 203.

The left support portion 201 is connected to the left seat frame portion 18. As shown in the vehicle side view of FIG. 4, the left support portion 201 extends obliquely upward to the front from the left seat frame portion 18. The right support portion 202 is connected to the right seat frame portion 19. In the vehicle side view, the right support portion 202 extends obliquely upward to the front from the right seat frame portion 19.

As shown in FIG. 5, the left support portion 201 and the right support portion 202 is connected through the middle portion 203. In the vehicle plan view, the middle portion 203 extends in the vehicle width direction. In the vehicle plan view, the left support portion 201 extends forward and laterally inward from the left seat frame portion 18. In the vehicle plan view, the right support portion 202 extends forward and laterally inward from the right seat frame portion 19.

It should be noted that the term "laterally inward" means directions that approach, along the vehicle width direction, to a vehicle center line C1 passing through the vehicle width directional center of the vehicle. On the other hand, the term "laterally outward" means directions that separate, along the vehicle width direction, from the vehicle center line C1 passing through the vehicle width directional center of the vehicle.

The coupling frame portion 14 is disposed in a higher position than the lower frame portions 16 and 17 and extends in the vehicle back-and-forth direction. The coupling frame portion 14 couples the down frame portion 12 and the rear frame portion 13. The coupling frame portion 14 will be explained below in detail.

As shown in FIG. 1, the seat 4 is supported by the vehicle body frame 2. The seat 4 is a portion on which a rider is seated. The seat 4 is disposed over the seat frame portions 18 and 19. The seat 4 is supported by the seat frame portions 18 and 19 through a stay (not shown in the drawings).

The power unit 6 is disposed under the seat 4. The power unit 6 is pivotably supported by the vehicle body frame 2. The power unit 6 includes an engine 25 and a transmission 26. The power unit 6 supports the rear wheel 5 such that the rear wheel 5 is rotatable. As shown in the vehicle side view of FIG. 1, at least portion of the connecting member 20 is located over a cylinder head 251 of the engine 25.

The steering device 7 includes a steering shaft 27, a handle member 28 and a suspension 29. The steering shaft 27 is inserted into the head pipe 11. The steering shaft 27 is supported by the head pipe 11 and is thereby turnable right and left. A lower portion of the steering shaft 27 is connected to the suspension 29.

The suspension 29 supports the front wheel 3 such that the front wheel 3 is rotatable. A front fender 30 is disposed over the front wheel 3. An upper portion of the steering shaft 27 is joined to the handle member 28. The handle member 28 is configured to be operated by the rider to pivot the front wheel 3.

The vehicle body cover 8 includes a rear cover 31, a lower cover 32, a center tunnel portion 33 and a front cover 34. The rear cover 31 covers the surroundings of the seat frame portions 18 and 19. The rear cover 31 is disposed under the seat 4.

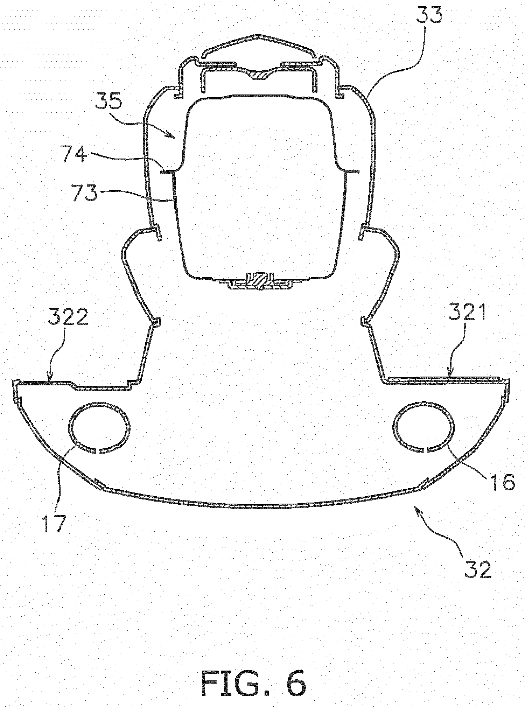

The lower cover 32 is disposed between the front cover 34 and the rear cover 31. The lower cover 32 covers the surroundings of the lower frame portions 16 and 17. FIG. 6 is a cross-sectional view of FIG. 1 taken along line VI-VI. As shown in FIG. 6, the upper surface of the lower cover 32 includes a left floor step portion 321 and a right floor step portion 322.

As shown in FIG. 1, at least portion of the left floor step portion 321 is located between the rear end of the head pipe 11 and the front end of the seat 4 in the vehicle back-and-forth direction. The left floor step portion 321 is disposed leftward of the head pipe 11. The right floor step portion 322 is disposed approximately bilaterally symmetric to the left floor step portion 321. Therefore, at least portion of the right floor step portion 322 is located between the rear end of the head pipe 11 and the front end of the seat 4 in the vehicle back-and-forth direction. The right floor step portion 322 is disposed rightward of the head pipe 11.

The center tunnel portion 33 is disposed between the left floor step portion 321 and the right floor step portion 322 in the vehicle width direction. The center tunnel portion 33 is disposed between the front cover 34 and the rear cover 31 in the vehicle back-and-forth direction. The center tunnel portion 33 has a cross-section made in an upwardly bulging convex shape. The center tunnel portion 33 extends in the vehicle back-and-forth direction. A fuel tank 35 is disposed within the center tunnel portion 33.

The front cover 34 is disposed in front of the seat 4. The front cover 34 covers the surroundings of the head pipe 11. The front cover 34 covers the surroundings of the down frame portion 12. A headlamp 36 is attached to the front cover 34.

Next, the coupling frame portion 14 will be explained in detail.

As shown in FIGS. 2 to 5, the coupling frame portion 14 couples the down frame portion 12 and the connecting member 20. As shown in the vehicle side view of FIG. 4, the coupling frame portion 14 tilts with respect to the vehicle back-and-forth direction. The coupling frame portion 14 tilts forward and upward. In the vehicle side view, the coupling frame portion 14 has a bent shape at a bent portion 100. When described in detail, the coupling frame portion 14 bends in an upwardly convex shape in the vehicle side view.

A front portion of the coupling frame portion 14 is connected to the down frame portion 12 at a higher position than a lower end of the gusset portion 15. In the vehicle side view, an extension of the upper surface of the coupling frame portion 14 overlaps with the gusset portion 15. A rear portion of the coupling frame portion 14 is connected to the connecting member 20. When described in detail, as shown in FIG. 5, the rear portion of the coupling frame portion 14 is connected to the middle portion 203 of the connecting member 20.

In the vehicle plan view, the coupling frame portion 14 overlaps with the vehicle center line C1 in the vehicle width direction. In the vehicle plan view, at least portion of the coupling frame portion 14 is located between the left lower frame portion 16 and the right lower frame portion 17. In the vehicle plan view, the coupling frame portion 14 overlaps with the second cross frame portion 23. In the vehicle plan view, the coupling frame portion 14 is larger than the diameter of the head pipe 11 in the vehicle width direction. In the vehicle plan view, the coupling frame portion 14 is smaller than the fuel tank 35 in the vehicle width direction.

The coupling frame portion 14 is disposed within the center tunnel portion 33. The fuel tank 35 is disposed under the coupling frame portion 14 within the center tunnel portion 33. The aforementioned left floor step portion 321 is disposed in a lower position than the coupling frame portion 14. The right floor step portion 322 is disposed in a lower position than the coupling frame portion 14. The coupling frame portion 14 is made of sheet metal. In a cross-sectional view perpendicular to the vehicle back-and-forth direction, the coupling frame portion 14 has a cross-section made in an upwardly bent convex shape. In other words, the coupling frame portion 14 has a cross-sectional shape similar to U-shaped channel steel.

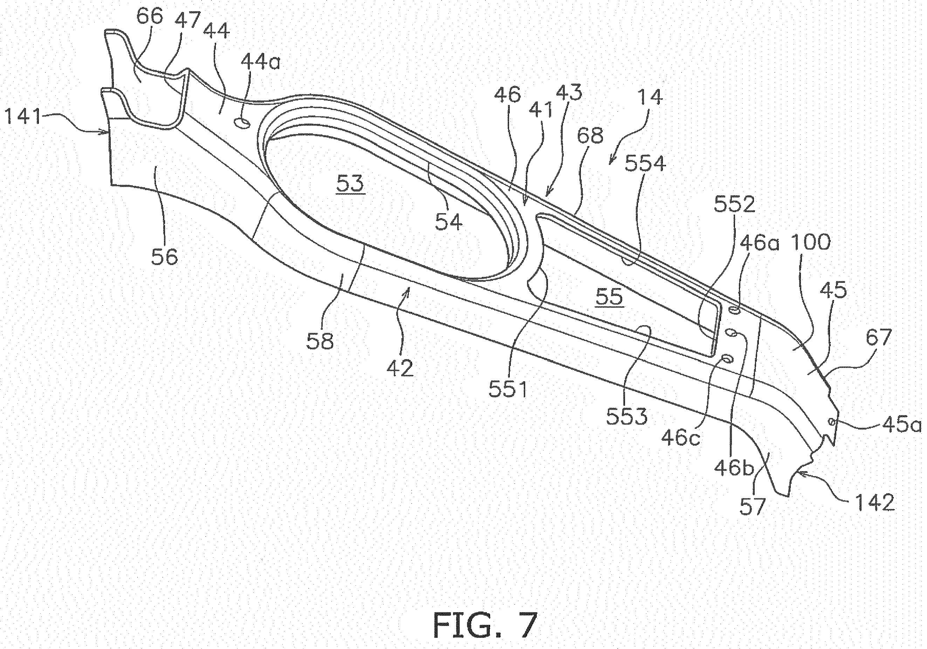

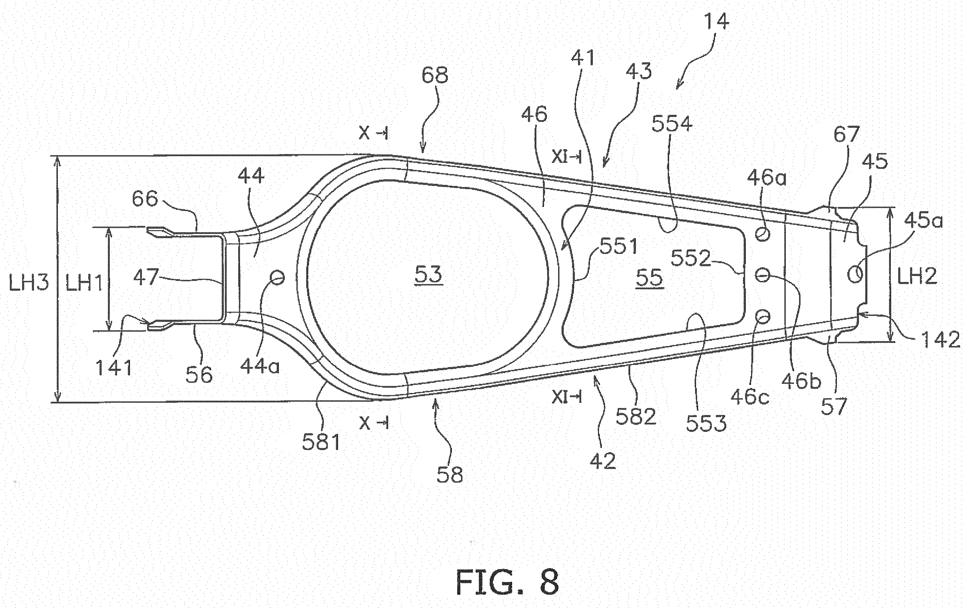

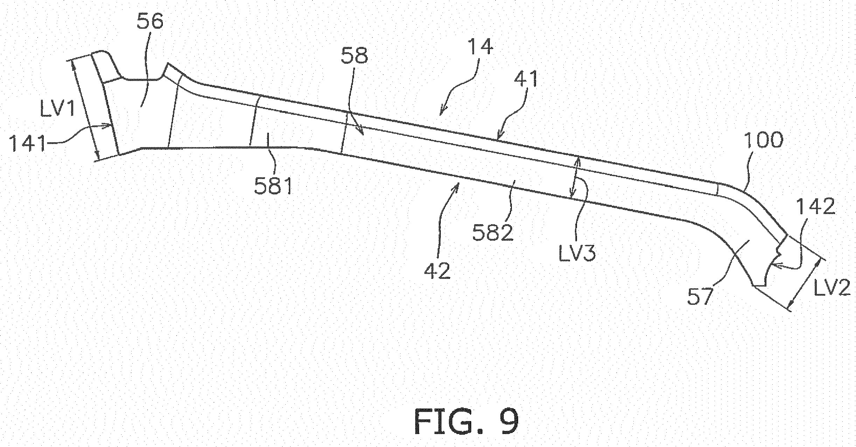

FIG. 7 is a perspective view of the coupling frame portion 14. FIG. 8 is a plan view of the coupling frame portion 14. FIG. 9 is a side view of the coupling frame portion 14.

The coupling frame portion 14 includes a transverse plate portion 41 and longitudinal plate portions 42 and 43. The transverse plate portion 41 extends in the vehicle width direction. The upper surface of the transverse plate portion 41 has a flat shape. The longitudinal plate portions 42 and 43 extend in the up-and-down direction. The vehicle width directional dimension of the transverse plate portion 41 is larger than each of the up-and-down directional dimensions of the longitudinal plate portions 42 and 43.

When described in detail, the maximum vehicle width directional dimension LH3 of the transverse plate portion 41 (see FIG. 8) is larger than each of the maximum up-and-down directional dimensions LV1 of the longitudinal plate portions 42 and 43 (see FIG. 9). The minimum vehicle width directional dimension LH1 of the transverse plate portion 41 (see FIG. 8) is larger than each of the minimum up-and-down directional dimensions LV3 of the longitudinal plate portions 42 and 43 (see FIG. 9).

The coupling frame portion 14 includes a first joint portion 141 and a second joint portion 142. The first joint portion 141 is joined to the down frame portion 12. The second joint portion 142 is joined to the rear frame portion 13. In the present preferred embodiment, the first joint portion 141 is joined to the down frame portion 12 by welding. The second joint portion 142 is joined to the rear frame portion 13 by welding.

The transverse plate portion 41 includes a first transverse joint portion 44, a second transverse joint portion 45 and a transverse body 46. The transverse body 46 is located between the first transverse joint portion 44 and the second transverse joint portion 45. The rear end of the second transverse joint portion 45 composes the second joint portion 142.

The first transverse joint portion 44 includes a first recess 47. The first recess 47 has a shape recessed rearward from the first joint portion 141.

As shown in FIG. 8, the vehicle width directional dimension LH1 of the first joint portion 141 is different from the vehicle width directional dimension of the transverse body 46. When described in detail, the vehicle width directional dimension LH1 of the first joint portion 141 is smaller than the maximum vehicle width directional dimension LH3 of the transverse body 46. The vehicle width directional dimension LH2 of the second joint portion 142 is different from the vehicle width directional dimension of the transverse body 46. When described in detail, the vehicle width directional dimension LH2 of the second joint portion 142 is smaller than the maximum vehicle width directional dimension LH3 of the transverse body 46.

The transverse body 46 is located between the first joint portion 141 and the second joint portion 142 in the vehicle back-and-forth direction. The transverse body 46 includes portions having vehicle width directional dimensions different from each other. When described in detail, the vehicle width directional dimension of the transverse body 46 gradually increases forward.

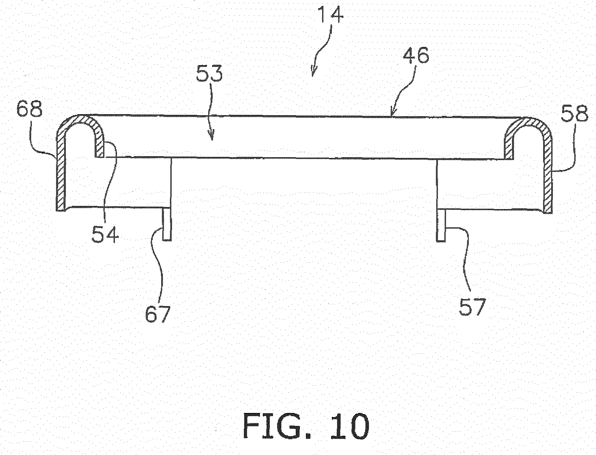

The transverse body 46 includes a first hole 53. The first hole 53 has a circular shape. When described in detail, the first hole 53 has a circular shape elongated in the vehicle back-and-forth direction. The maximum vehicle width directional dimension of the first hole 53 is larger than the vehicle width directional dimension LH1 of the first joint portion 141. The maximum vehicle width directional dimension of the first hole 53 is larger than the vehicle width directional dimension LH2 of the second joint portion 142. FIG. 10 is a cross-sectional view of FIG. 8 taken along line X-X. As shown in FIG. 10, a rib 54 is provided on the edge of the first hole 53. The rib 54 curves and extends downward from the edge of the first hole 53.

The transverse body 46 includes a second hole 55. The second hole 55 has a shape elongated in the vehicle back-and-forth direction. In the vehicle width direction, the second hole 55 is smaller than the inner diameter of the first hole 53. The vehicle width directional dimension of the second hole 55 gradually increases forward. The maximum vehicle width directional dimension of the second hole 55 is larger than the vehicle width directional dimension LH2 of the second joint portion 142. The minimum vehicle width directional dimension of the second hole 55 is smaller than the vehicle width directional dimension LH2 of the second joint portion 142.

The edge of the second hole 55 includes a front edge portion 551 and a rear edge portion 552. The front edge portion 551 has a circular-arc shape along the shape of the first hole 53. The rear edge portion 552 has a straight shape extending in the vehicle width direction. The edge of the second hole 55 includes a left edge portion 553 and a right edge portion 554. In the vehicle plan view, the left edge portion 553 tilts with respect to the vehicle back-and-forth direction. In the vehicle plan view, the left edge portion 553 tilts forward and laterally outward. In the vehicle plan view, the right edge portion 554 tilts with respect to the vehicle back-and-forth direction. In the vehicle plan view, the right edge portion 554 tilts forward and laterally outward.

The transverse body 46 includes small holes 46a, 46b and 46c. The small holes 46a, 46b and 46c are provided behind of the second hole 55. Each of the opening areas of the small holes 46a, 46b and 46c is smaller than each of the opening areas of the first and second holes 53 and 55.

The first transverse joint portion 44 includes a small hole 44a. The second transverse joint portion 45 includes a small hole 45a. Each of the opening areas of the small holes 44a and 45a is smaller than each of the opening areas of the first and second holes 53 and 55.

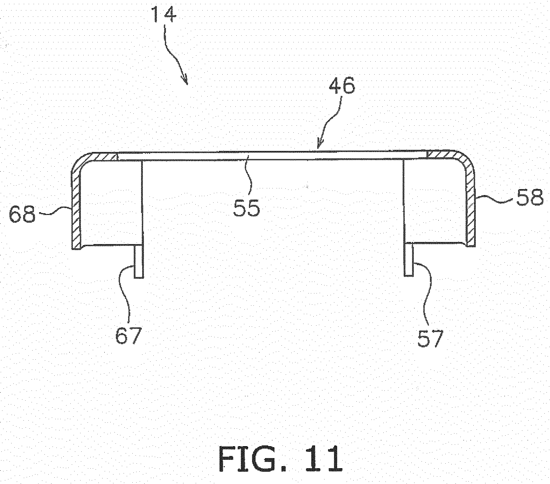

FIG. 11 is a cross-sectional view of FIG. 8 taken along line XI-XI. As shown in FIG. 11, each of the left edge portion 553 and the right edge portion 554 is not provided with a rib such as the rib 54 of the first hole 53. Likewise, each of the front edge portion 551 and the rear edge portion 552 is not provided with a rib such as the rib 54. In other words, the edge of the second hole 55 is not provided with a rib such as the rib 54 of the first hole 53.

The longitudinal plate portions 42 and 43 include a left longitudinal plate portion 42 and a right longitudinal plate portion 43. The left longitudinal plate portion 42 extends downward from the left lateral edge of the transverse plate portion 41. The right longitudinal plate portion 43 extends downward from the right lateral edge of the transverse plate portion 41. The transverse plate portion 41, the left longitudinal plate portion 42 and the right longitudinal plate portion 43 are formed by bending an integrated plate member. It should be noted that the transverse plate portion 41, the left longitudinal plate portion 42 and the right longitudinal plate portion 43 may be formed by joining separate members by welding or so forth.

In the vehicle side view, the left longitudinal plate portion 42 extends obliquely upward to the front. The left longitudinal plate portion 42 includes a first left longitudinal joint portion 56, a second left longitudinal joint portion 57 and a left longitudinal body 58. The front end of the first left longitudinal joint portion 56 composes portion of the first joint portion 141. The first left longitudinal joint portion 56 is joined to the down frame portion 12 by welding.

The rear end of the second left longitudinal joint portion 57 composes portion of the second joint portion 142. The second left longitudinal joint portion 57 is joined to the rear frame portion 13 by welding. When described in detail, the second left longitudinal joint portion 57 is connected to the seat frame portions 18 and 19 through the connecting member 20.

The left longitudinal body 58 is located between the first left longitudinal joint portion 56 and the second left longitudinal joint portion 57. As shown in FIG. 9, the up-and-down directional dimension LV1 of the first joint portion 141 is different from the up-and-down directional dimension of the left longitudinal body 58. The up-and-down directional dimension LV1 of the first joint portion 141 is larger than the minimum up-and-down directional dimension LV3 of the left longitudinal body 58. It should be noted that in the present preferred embodiment, regarding the first and second joint portions 141 and 142, the up-and-down directional dimension of the coupling frame portion 14 means a dimension of the shortest line segment connecting the upper and lower ends thereof in a side view. On the other hand, regarding the other portion excluding the first and second joint portions 141 and 142, the up-and-down directional dimension of the coupling frame portion 14 means a dimension in a direction perpendicular to the upper surface of the transverse plate portion 41.

The up-and-down directional dimension LV2 of the second joint portion 142 is different from the up-and-down directional dimension of the left longitudinal body 58. The up-and-down directional dimension LV2 of the second joint portion 142 is larger than the minimum up-and-down directional dimension LV3 of the left longitudinal body 58.

A portion 581 of the left longitudinal body 58, located laterally to the first hole 53, has a shape curved along the shape of the first hole 53. A portion 582 of the left longitudinal body 58, located laterally to the second hole 55, has a straight shape along the second hole 55.

The left longitudinal body 58 includes portions having up-and-down directional dimensions different from each other. When described in detail, the portion 581 located laterally to the first hole 53 in the left longitudinal body 58 is up-and-down directionally larger than the portion 582 located laterally to the second hole 55 in the left longitudinal body 58.

The right longitudinal plate portion 43 has a shape bilaterally symmetric to the left longitudinal plate portion 42. The right longitudinal plate portion 43 includes a first right longitudinal joint portion 66, a second right longitudinal joint portion 67 and a right longitudinal body 68. The front end of the first right longitudinal joint portion 66 composes portion of the first joint portion 141. The rear end of the second right longitudinal joint portion 67 composes portion of the second joint portion 142. The first right longitudinal joint portion 66, the second right longitudinal joint portion 67 and the right longitudinal body 68 respectively have shapes similar to the first left longitudinal joint portion 56, the second left longitudinal joint portion 57 and the left longitudinal body 58, except for their bilateral symmetrical shapes thereto.

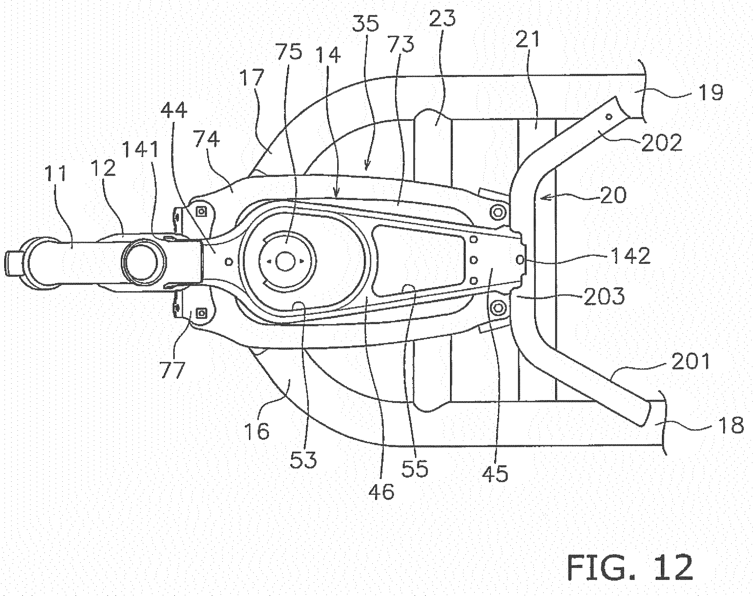

FIG. 12 is an enlarged plan view of the coupling frame portion 14 and its surroundings. As shown in FIGS. 1 and 12, the fuel tank 35 includes a tank body 73, a flange portion 74 and a filler portion 75. As shown in FIG. 6, the tank body 73 includes an internal space in which fuel is stored. The flange portion 74 horizontally protrudes from the tank body 73. The flange portion 74 is attached to the down frame portion 12 through a first tank bracket 77. As shown in FIG. 1, the flange portion 74 is attached to the connecting member 20 through a second tank bracket 78.

As shown in FIGS. 1 and 12, the filler portion 75 upwardly protrudes from the tank body 73. The filler portion 75 is disposed while penetrating the first hole 53 of the coupling frame portion 14. The filler portion 75 upwardly protrudes through the coupling frame portion 14. The center tunnel portion 33 is provided with a filler port (not shown in the drawings), and the fuel can be supplied to the fuel tank 35 from the filler portion 75 thorough the filler port.

In the straddled vehicle according to the present preferred embodiment explained above, the coupling frame portion 14 is made of sheet metal, and includes the transverse plate portion 41 extending in the vehicle width direction and the left and right longitudinal plate portions 42 and 43 extending in the up-and-down direction. Therefore, the shape and dimensions of the transverse plate portion 41 and those of the left and right longitudinal plate portions 42 and 43 can be easily changed. Accordingly, the stiffness of the vehicle can be easily tuned. For example, by enlarging the left and right longitudinal plate portions 42 and 43 in the up-and-down direction, increase in transverse stiffness can be inhibited, while increase in longitudinal stiffness can be achieved. Alternatively, by enlarging the transverse plate portion 41 in the vehicle width direction, increase in longitudinal stiffness can be inhibited, while increase in torsional stiffness can be achieved.

Additionally, unlike a coupling frame portion made of pipe, the coupling frame portion 14 made of sheet metal can be easily formed in a shape that each of the transverse plate portion 41 and the left and right longitudinal plate portions 42 and 43 includes a portion sized differently from the rest. Therefore, the strength of the coupling frame portion 14 can be reliably kept high in the portions connected to the down frame portion 12 and the rear frame portion 13, while the stiffness of the entire coupling frame portion 14 can be easily inhibited from being excessively high.

The vehicle width directional dimension of the transverse plate portion 41 is larger than each of the up-and-down directional dimensions of the left and right longitudinal plate portions 42 and 43. Accordingly, increase in transverse stiffness can be inhibited. Therefore, comfortableness in riding the vehicle can be enhanced, for instance, when the vehicle corners in low and middle vehicle speed ranges.

The vehicle width directional dimension of the transverse body 46 is different from each of the vehicle width directional dimensions of the first and second joint portions 141 and 142. Thus, the vehicle width directional dimension of the transverse body 46 can be set without being limited by each of the vehicle width directional dimensions of the first and second joint portions 141 and 142. Accordingly, transverse stiffness can be easily tuned.

The transverse body 46 includes portions having vehicle width directional dimensions different from each other. Thus, transverse stiffness can be easily tuned by partially changing the vehicle width directional dimension of the transverse plate portion 41.

The up-and-down directional dimension of the left longitudinal body 58 is different from each of the up-and-down directional dimensions of the first and second joint portions 141 and 142. Thus, the up-and-down directional dimension of the left longitudinal body 58 can be set without being limited by each of the up-and-down directional dimensions of the first and second joint portions 141 and 142. Accordingly, longitudinal stiffness can be easily tuned.

The left longitudinal plate portions 42 includes portions having up-and-down directional dimensions different from each other. Thus, longitudinal stiffness can be easily tuned by partially changing the up-and-down directional dimension of the left longitudinal plate portions 42.

It should be noted that the aforementioned features of the left longitudinal plate portions 42 is also true of the right longitudinal plate portions 43.

The coupling frame portion 14 includes the first hole 53, the second hole 55 and the small holes 46a, 46b and 46c. Thus, longitudinal stiffness, transverse stiffness and torsional stiffness can be tuned by adjusting the size, shape and position of each of the first hole 53, the second hole 55 and the small holes 46a, 46b and 46c.

The first hole 53 is provided with the rib 54 on the edge thereof. Therefore, degradation in strength of the transverse plate portion 41 can be inhibited, while stiffness of the vehicle can be tuned.

The coupling frame portion 14 tilts with respect to the vehicle back-and-forth direction in the vehicle side view. Thus, stiffness can be tuned by adjusting the posture of the coupling frame portion 14.

The coupling frame portion 14 is connected to the down frame portion 12 at a higher position than the lower end of the gusset portion 15. Accordingly, stiffness against a load to be inputted from the head pipe 11 can be enhanced.

The vehicle width directional dimension of the coupling frame portion 14 is smaller than the vehicle width directional dimension of the fuel tank 35 in the vehicle plan view. Thus, the vehicle width directional dimension of the coupling frame portion 14 is small, and hence, increase in width of the center tunnel portion 33 can be prevented. Accordingly, spaces for putting the feet of a rider can be extended on the right and left of the center tunnel portion 33, and thereby, comfortableness of the rider can be enhanced.

The filler portion 75 of the fuel tank 35 is disposed through the first hole 53. Accordingly, interference between the coupling frame portion 14 and the filler portion 75 can be avoided, and simultaneously, required transverse stiffness can be reliably achieved in the rest of the transverse plate portion 41 other than the first hole 53.

One preferred embodiment has been explained above. However, the present teaching is not limited to the aforementioned preferred embodiment, and a variety of changes can be made without departing from the scope of the present teaching.

The term "straddled vehicle" encompasses a motorcycle, an all-terrain vehicle and a snowmobile. Additionally, the term "motorcycle" encompasses a sport-type motorcycle and a moped.

The number of the front wheels (3) in the straddled vehicle 1 is not limited to one and may be two or more. Alternatively, the number of the rear wheels (5) in the straddled vehicle 1 is not limited to one and may be two or more.

The structure of the vehicle body frame 2 is not limited to that of the aforementioned preferred embodiment, and may be changed. For example, the connecting member 20 may be joined to the left and right lower frame portions 16 and 17. The coupling frame portion 14 may be connected to the rear frame portion 13 without through the connecting member 20.

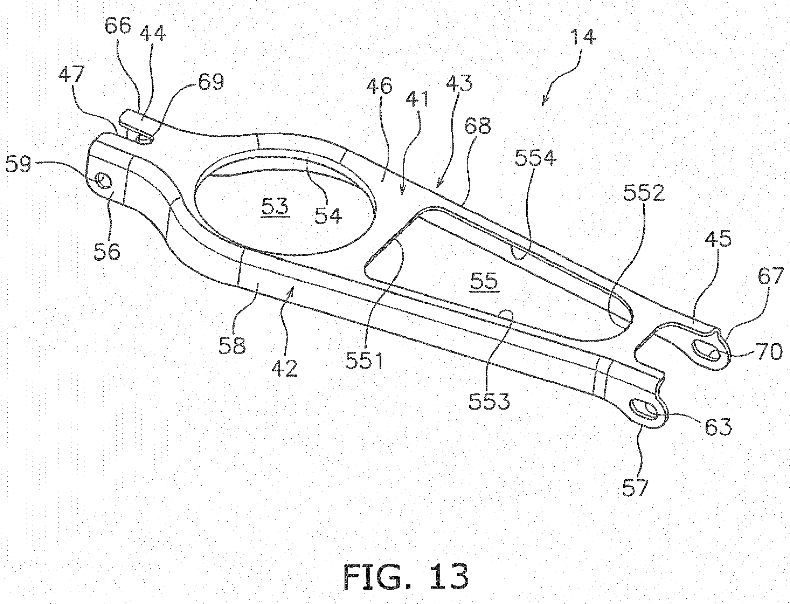

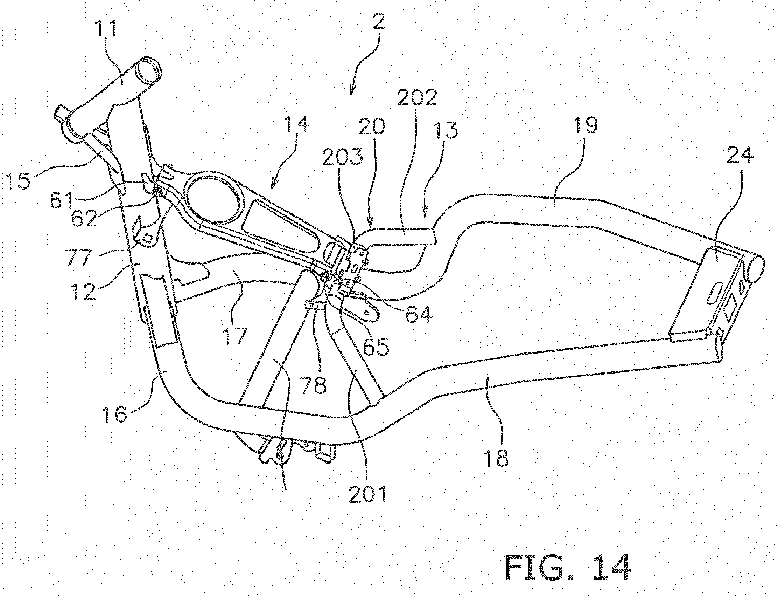

The coupling frame portion 14 may be fixed to the down frame portion 12 and the rear frame portion 13 not by welding but by another fixation means such as bolt fastening. For example, as shown in FIG. 13, the first left longitudinal joint portion 56 of the coupling frame portion 14 may be provided with a fastener hole 59, and likewise, the first right longitudinal joint portion 66 of the coupling frame portion 14 may be provided with a fastener hole 69. Additionally, as shown in FIG. 14, the down frame portion 12 may be provided with a first joint bracket 61. The first left longitudinal joint portion 56 and the first right longitudinal joint portion 66 may be herein fixed to the first joint bracket 61 by inserting a bolt 62 through the fastener hole 59, holes provided in the first joint bracket 61, and the fastener hole 69.

On the other hand, as shown in FIG. 13, the second left longitudinal joint portion 57 may be provided with a fastener hole 63, and likewise, the second right longitudinal joint portion 67 may be provided with a fastener hole 70. Additionally, as shown in FIG. 14, the connecting member 20 may be provided with a second joint bracket 64. The second left longitudinal joint portion 57 and the second right longitudinal joint portion 67 may be herein fixed to the second joint bracket 64 by inserting a bolt 65 through the fastener hole 63 of the second left longitudinal joint portion 57, holes provided in the second joint bracket 64, and the fastener hole 70 of the second right longitudinal joint portion 67.

The coupling frame portion 14 may be horizontally disposed. The coupling frame portion 14 may be connected to the down frame portion 12 at a lower position than the lower end of the gusset portion 15.

The structure of the coupling frame portion 14 is not limited to that of the aforementioned preferred embodiment, and may be changed. For example, the cross-sectional shape of the coupling frame portion 14 may be different from that of the aforementioned preferred embodiment, and may be a downwardly bent convex shape, a T shape or so forth. The shape of the coupling frame portion 14 is not limited to the bent shape, and may be a straight shape.

The first transverse joint portion 44 may not be provided with the first recess 47. In this case, the front end of the first transverse joint portion 44 may compose the first joint portion 141. In other words, the front end of the first transverse joint portion 44 may be fixed to the down frame portion 12 by fixation means such as welding.

The vehicle width directional dimension of the first joint portion 141 may be equal to that of the transverse body 46. The vehicle width directional dimension of the second joint portion 142 may be equal to that of the transverse body 46.

The up-and-down directional dimension of the first joint portion 141 may be equal to each of the up-and-down directional dimensions of the left and right longitudinal bodies 58 and 68. The up-and-down directional dimension of the second joint portion 142 may be equal to each of the up-and-down directional dimensions of the left and right longitudinal bodies 58 and 68.

The number, position and shape of holes provided in the coupling frame portion 14 may be changed. For example, each of the longitudinal plate portions 42 and 43 may be provided with one or more holes other than the bolt holes. The number of holes may be one. Alternatively the number of holes may be two or more. The first hole 53 may not be provided with the rib 54. The second hole 55 may be provided with the rib 54.

The filler portion 75 may not pass through the first hole 53 of the coupling frame portion 14.

## Claims

1. A straddled vehicle, comprising:
a fuel tank (35);
a head pipe (11);
a down frame portion (12) extending downward from the head pipe (11);
a rear frame portion (13) disposed rearward of a front end of the down frame portion (12), the rear frame portion (13) including a lower frame portion (16,17) and a seat frame portion (18,19), the lower frame portion (16,17) extending rearward from the down frame portion (12) at a lower position than the head pipe (11), the seat frame portion (18,19) extending rearward and upward from the lower frame portion (16,17);
a seat (4) for a rider, at least a portion of the seat (4) being disposed over the seat frame portion (18,19); and
a coupling frame portion (14) extending in a vehicle back-and-forth direction at a higher position than the lower frame portion (16,17), the coupling frame portion (14) coupling the down frame portion (12) and the rear frame portion (13), wherein
the coupling frame portion (14) is made of sheet metal, and the coupling frame portion (14) includes a transverse plate portion (41) and a longitudinal plate portion (42,43), the transverse plate portion (41) extending in a vehicle width direction, the longitudinal plate portion (42,43) extending in an up-and-down direction wherein a left floor step portion (321) is disposed leftward of the head pipe (11) and in a lower position than the coupling frame portion (14), at least a portion of the left floor step portion (321) being located between a rear end of the head pipe (11) and a front end of the seat (4) in the vehicle back-and-forth direction;
a right floor step portion (322) is disposed rightward of the head pipe (11) and in a lower
position than the coupling frame portion (14), at least a portion of the right floor step portion (322) being located between the rear end of the head pipe (11) and the front end of the seat (4) in the vehicle back-and-forth direction;
a center tunnel portion (33) disposed between the left floor step portion (321) and the right floor step portion (322) in the vehicle width direction, the center tunnel portion (33) having a cross-section made in an upwardly bulging convex shape, the center tunnel portion (33) extending in the vehicle back-and-forth direction, **characterized in that** the fuel tank (35) is disposed under the coupling frame portion (14) within the center tunnel portion (33),
wherein
the coupling frame portion (14) is disposed within the center tunnel portion (33), and a vehicle width directional dimension of the coupling frame portion (14) is smaller than a vehicle width directional dimension of the fuel tank (35) in a vehicle plan view.

2. The straddled vehicle according to claim 1, **characterized in that** a vehicle width directional dimension of the transverse plate portion (41) is larger than an up-and-down directional dimension of the longitudinal plate portion (42,43).

3. The straddled vehicle according to claim 1 or 2, **characterized in that** the coupling frame portion (14) includes a first joint portion (141) joined to the down frame portion (12), and a second joint portion (142) joined to the rear frame portion (13), wherein the transverse plate portion (41) includes a transverse body (46) located between the first joint portion (141) and the second joint portion (142), and
a vehicle width directional dimension of the transverse body (46) is different from either or both of vehicle width directional dimensions of the first and second joint portions (141,142).

4. The straddled vehicle according to claim 3, **characterized in that** the transverse body (46) includes portions having vehicle width directional dimensions different from each other.

5. The straddled vehicle according to claims 3 or 4, **characterized in that** the longitudinal plate portion (42,43) includes a longitudinal body (58,68) located between the first joint portion (141) and the second joint portion (142), and
an up-and-down directional dimension of the longitudinal body (58,68) is different from either or both of up-and-down directional dimensions of the first and second joint portions (141,142).

6. The straddled vehicle according to claim 5, **characterized in that** the longitudinal body (58,68) includes portions having up-and-down directional dimensions different from each other.

7. The straddled vehicle according to any of claims 1 to 6, **characterized in that** the coupling frame portion (14) includes a hole (44a,45a,46a,46b,46c,53,55).

8. The straddled vehicle according to claim 7, **characterized in that** the hole is provided in the transverse plate portion (41) and/or the hole is provided in the longitudinal plate portion (42,43).

9. The straddled vehicle according to claim 7 or 8, **characterized in that** the hole (53,55) has a circular shape, or the hole (53,55) has a shape elongated in the vehicle back-and-forth direction.

10. The straddled vehicle according to any of claims 7 to 9, **characterized in that** the hole (53) is provided with a rib (54) on an edge thereof.

11. The straddled vehicle according to any of claims 1 to 10, **characterized in that** the coupling frame portion (14) is disposed to be tilted with respect to the vehicle back-and-forth direction in a vehicle side view.

12. The straddled vehicle according to any of claims 1 to 11, **characterized by:**
a gusset portion (15) attached across the head pipe (11) and the down frame portion (12), wherein
the coupling frame portion (14) is connected to the down frame portion (12) at a higher position than a lower end of the gusset portion (15).

13. The straddled vehicle according to any of claims 1 to 12, **characterized in that** the transverse plate portion (41) includes a hole (53),
the fuel tank (35) includes a tank body (73) including an internal space for storing a fuel, and
a filler portion (75) upwardly protruding from the tank body (73), and
the filler portion (75) is disposed through the hole (53).

14. The straddled vehicle according to any of claims 1 to 13, **characterized in that** the coupling frame portion (14) has a cross-section made in an upwardly bent convex shape in a cross-sectional view perpendicular to the vehicle back-and-forth direction.

15. The straddled vehicle according to any of claims 1 to 14, **characterized in that** the longitudinal plate portion includes a left longitudinal plate portion (42) downwardly extending from a left lateral edge of the transverse plate portion (41), and
a right longitudinal plate portion (43) downwardly extending from a right lateral edge of the transverse plate portion (41).

16. The straddled vehicle according to any of claims 1 to 15, **characterized in that** the seat frame portion includes a left seat frame portion (18) disposed leftward of the head pipe (11), and
a right seat frame portion (19) disposed rightward of the head pipe (11),
the rear frame portion (13) includes a connecting member (20) connecting the left seat frame portion (18) and the right seat frame portion (19), and
the coupling frame portion (14) couples the down frame portion (12) and the connecting member (20).

17. The straddled vehicle according to any of claims 1 to 16, **characterized in that** the lower frame portion includes a left lower frame portion (16) and a right lower frame portion (17),
the left lower frame portion (16) is disposed leftward of the head pipe (11), the left lower frame portion (16) is connected to a lower portion of the down frame portion (12), the left lower frame portion (16) extends obliquely leftward to the rear from the down frame portion (12) and bends rearward, the right lower frame portion (17) is disposed rightward of the head pipe (11), the right lower frame portion (17) is connected to the lower portion of the down frame portion (12), the right lower frame portion (17) extends obliquely rightward to the rear from the down frame portion (12) and bends rearward.

## Patentansprüche

1. Ein Spreiz-Sitz-Fahrzeug, das umfasst:
einen Kraftstoff-Tank (35);
ein Kopf-Rohr (11);
einen Unter-Rahmen-Abschnitt (12), der sich nach unten von dem Kopf-Rohr (11) erstreckt;
einen Hinter-Rahmen-Abschnitt (13), der hinter einem Vorder-Ende des Unter-Rahmen-Abschnitts (12) positioniert ist, der Hinter-Rahmen-Abschnitt (13) beinhaltet einen unteren Rahmen-Abschnitt (16, 17) und einen Sitz-Rahmen-Abschnitt (18, 19), der untere Rahmen-Abschnitt (16, 17) erstreckt sich von dem Unter-Rahmen-Abschnitt (12), an einer niedrigeren Position als das Kopf-Rohr (11), nach hinten, der Sitz-Rahmen-Abschnitt (18, 19) erstreckt sich von dem unteren Rahmen-Abschnitt (16, 17) nach hinten und oben;
einen Sitz (4) für einen Fahrer, zumindest ein Abschnitt von dem Sitz (4) ist oberhalb des Sitz-Rahmen-Abschnitts (18, 19) positioniert; und
einen Kopplungs-Rahmen-Abschnitt (14), der sich in einer Fahrzeug-Rück-und-Vorwärts-Richtung an einer höheren Position als der untere Rahmen-Abschnitt (16, 17) erstreckt, der Kopplungs-Rahmen-Abschnitt (14) koppelt den Unter-Rahmen-Abschnitt (12) und den Hinter-Rahmen-Abschnitt (13), wobei
der Kopplungs-Rahmen-Abschnitt (14) aus einem Blech gemacht ist, und der Kopplungs-Rahmen-Abschnitt (14) beinhaltet einen Quer-Platten-Abschnitt (41) und einen Längs-Platten-Abschnitt (42, 43), der Quer-Platten-Abschnitt (41) erstreckt sich in einer Fahrzeug-Breiten-Richtung, der Längs-Platten-Abschnitt (42, 43) erstreckt sich in einer Oben-und-Unten-Richtung, wobei
ein linker Trittbrett-Abschnitt (321) links von dem Kopf-Rohr (11) und in einer niedrigeren Position als der Kopplungs-Rahmen-Abschnitt (14) positioniert ist, zumindest ein Abschnitt des linken Trittbrett-Abschnitts (321) ist zwischen einem Hinter-Ende des Kopf-Rohrs (11) und einem Vorder-Ende des Sitzes (4) in der Fahrzeug-Rück-und-Vorwärts-Richtung angeordnet;
ein rechter Trittbrett-Abschnitt (322) rechts von dem Kopf-Rohr (11) in einer niedrigeren Position als der Kopplungs-Rahmen-Abschnitt (14) positioniert ist, zumindest ein Abschnitt des rechten Trittbrett-Abschnitts (322) ist zwischen dem Hinter-Ende des Kopf-Rohrs (11) und dem Vorder-Ende des Sitzes (4) in der Fahrzeug-Rück-und-Vorwärts-Richtung angeordnet;
einen Zentral-Tunnel-Abschnitt (33), der zwischen dem linken Trittbrett-Abschnitt (321) und dem rechten Trittbrett-Abschnitt (322) in der Fahrzeug-Breiten-Richtung positioniert ist, der Zentral-Tunnel-Abschnitt (33) hat einen Querschnitt, der in einer nach oben ausbeulenden konvexen Form gemacht ist, der Zentral-Tunnel-Abschnitt (33) erstreckt sich in der Fahrzeug-Rück-und-Vorwärts-Richtung, **dadurch gekennzeichnet, dass** der Kraftstoff-Tank (35) unter dem Kopplungs-Rahmen-Abschnitt (14) in dem Zentral-Tunnel-Abschnitt (33) positioniert ist, wobei der Kopplungs-Rahmen-Abschnitt (14) in dem Zentral-Tunnel-Abschnitt (33) positioniert ist, und eine Fahrzeug-Breiten-Richtungs-Abmessung des Kopplungs-Rahmen-Abschnitts (14) kleiner ist als eine Fahrzeug-Breiten-Richtungs-Abmessung des Kraftstoff-Tanks (35) in einer Fahrzeug-Draufsicht.

2. Das Spreiz-Sitz-Fahrzeug gemäß Anspruch 1, **dadurch gekennzeichnet, dass** eine Fahrzeug-Breiten-Richtungs-Abmessung des Quer-Platten-Abschnitts (41) größer ist als eine Oben-und-Unten-Richtungs-Abmessung des Längs-Platten-Abschnitts (42, 43).

3. Das Spreiz-Sitz-Fahrzeug gemäß Anspruch 1 oder 2, **dadurch gekennzeichnet, dass** der Kopplungs-Rahmen-Abschnitt (14) einen ersten Verbindungs-Abschnitt (141), der mit dem Unter-Rahmen-Abschnitt (12) verbunden ist, und einen zweiten Verbindungs-Abschnitt (142), der mit dem Hinter-Rahmen-Abschnitt (13) verbunden ist, beinhaltet, wobei der Quer-Platten-Abschnitt (41) einen Quer-Körper (46) beinhaltet, der zwischen dem ersten Verbindungs-Abschnitt und dem zweiten Verbindungs-Abschnitt (142) angeordnet ist,
eine Fahrzeug-Breiten-Richtungs-Abmessung des Quer-Körpers (46) ist unterschiedlich von einem oder beiden von den Fahrzeug-Breiten-Richtungs-Abmessungen des ersten und zweiten Verbindungs-Abschnitts (141, 142).

4. Das Spreiz-Sitz-Fahrzeug gemäß Anspruch 3, **dadurch gekennzeichnet, dass** der Quer-Körper (46) Abschnitte beinhaltet, die Fahrzeug-Breiten-Richtungs-Abmessungen unterschiedlich voneinander haben.

5. Das Spreiz-Sitz-Fahrzeug gemäß den Ansprüchen 3 oder 4, **dadurch gekennzeichnet, dass** der Längs-Platten-Abschnitt (42, 43) einen Längs-Körper (58, 68) beinhaltet, der zwischen dem ersten Verbindungs-Abschnitt (141) und dem zweiten Verbindungs-Abschnitt (142) angeordnet ist, und
eine Oben-und-Unten-Richtungs-Abmessung des Längs-Körpers (48, 68) ist unterschiedlich von einem oder beiden von den Oben-und-Unten-Richtungs-Abmessungen von den ersten und zweiten Verbindungs-Abschnitten (141, 142).

6. Das Spreiz-Sitz-Fahrzeug gemäß Anspruch 5, **dadurch gekennzeichnet, dass** der Längs-Körper (58, 68) Abschnitte beinhaltet, die Oben-und-Unten-Richtungs-Abmessungen unterschiedlich voneinander haben.

7. Das Spreiz-Sitz-Fahrzeug gemäß irgendeinem der Ansprüche 1 bis 6, **dadurch gekennzeichnet, dass** der Kopplungs-Rahmen-Abschnitt (14) ein Loch (44a, 45a, 46a, 46b, 46c, 53, 55) beinhaltet.

8. Das Spreiz-Sitz-Fahrzeug gemäß Anspruch 7, **dadurch gekennzeichnet, dass** das Loch in dem Quer-Platten-Abschnitt (41) vorgesehen ist, und/oder das Loch in dem Längs-Platten-Abschnitt (42, 43) vorgesehen ist.

9. Das Spreiz-Sitz-Fahrzeug gemäß Anspruch 7 oder 8, **dadurch gekennzeichnet, dass** das Loch (53, 55) eine Kreis-Form hat, oder das Loch (53, 55) eine Form, verlängert in der Fahrzeug-Rück-und-Vorwärts-Richtung, hat.

10. Das Spreiz-Sitz-Fahrzeug gemäß irgendeinem der Ansprüche 7 bis 8, **dadurch gekennzeichnet, dass** das Loch (53) mit einer Rippe (54) an einer Kante desselben vorgesehen ist.

11. Das Spreiz-Sitz-Fahrzeug gemäß irgendeinem der Ansprüche 1 bis 10, **dadurch gekennzeichnet, dass** der Kopplungs-Rahmen-Abschnitt (14) positioniert ist, um, mit Bezug auf die Fahrzeug-Rück-und-Vorwärts-Richtung, geneigt zu sein, in einer Fahrzeug-Seiten-Ansicht.

12. Das Spreiz-Sitz-Fahrzeug gemäß irgendeinem der Ansprüche 1 bis 11, **gekennzeichnet durch:**
einen Knoten-Abschnitt (15), der quer über das Kopf-Rohr (11) und den Unter-Rahmen-Abschnitt (12) angebracht ist, wobei
der Kopplungs-Rahmen-Abschnitt (14) mit dem Unter-Rahmen-Abschnitt (12) an einer höheren Position verbunden ist als ein unteres Ende des Knoten-Abschnitts (15).

13. Das Spreiz-Sitz-Fahrzeug gemäß irgendeinem der Ansprüche 1 bis 12, **dadurch gekennzeichnet, dass** der Quer-Platten-Abschnitt (41) ein Loch (53) beinhaltet,
der Kraftstoff-Tank (53) beinhaltet einen Tank-Körper (73), der einen Innen-Raum zum Lagern eines Kraftstoffs beinhaltet, und
einen Füll-Abschnitt (57), der nach oben von dem Tank-Körper (73) vorsteht, und
der Füll-Abschnitt (75) ist durch das Loch (53) positioniert.

14. Das Spreiz-Sitz-Fahrzeug gemäß irgendeinem der Ansprüche 1 bis 13, **dadurch gekennzeichnet, dass** der Kopplungs-Rahmen-Abschnitt (14) einen Querschnitt hat, der in einer nach oben gebogenen konvexen Form gemacht ist, in einer QuerschnittsAnsicht, senkrecht zu der Fahrzeug-Rück-und-Vorwärts-Richtung.

15. Das Spreiz-Sitz-Fahrzeug gemäß irgendeinem der Ansprüche 1 bis 14, **dadurch gekennzeichnet, dass** der Längs-Platten-Abschnitt einen linken Längs-Platten-Abschnitt (42), der sich nach unten von einer linken Quer-Kante des Quer-Platten-Abschnitts erstreckt, und einen rechten Längs-Platten-Abschnitt (43), der sich nach unten von einer rechten Quer-Kante des Quer-Platten-Abschnitts (41) erstreckt, beinhaltet.

16. Das Spreiz-Sitz-Fahrzeug gemäß irgendeinem der Ansprüche 1 bis 15, **dadurch gekennzeichnet, dass** der Sitz-Rahmen-Abschnitt einen linken Sitz-Rahmen-Abschnitt (18), der links von dem Kopf-Rohr (11) positioniert ist, und
einen rechten Sitz-Rahmen-Abschnitt (19), der rechts von dem Kopf-Rohr (11) positioniert ist, beinhaltet,
der Hinter-Rahmen-Abschnitt (13) beinhaltet ein Verbindungs-Element (20), das den linken Sitz-Rahmen-Abschnitt (18) und den rechten Sitz-Rahmen-Abschnitt (19) verbindet, und
der Kopplungs-Rahmen-Abschnitt (14) koppelt den Unter-Rahmen-Abschnitt (12) und das Verbindungselement (20).

17. Das Spreiz-Sitz-Fahrzeug gemäß irgendeinem der Ansprüche 1 bis 16, **dadurch gekennzeichnet, dass** der untere Rahmen-Abschnitt einen linken unteren Rahmen-Abschnitt (16) und einen rechten unteren Rahmen-Abschnitt (17) beinhaltet,
der linke untere Rahmen-Abschnitt (16) ist links von dem Kopf-Rohr positioniert, der linke untere Rahmen-Abschnitt (16) ist mit einem unteren Abschnitt des Unter-Rahmen-Abschnitts (12) verbunden, der linke untere Rahmen-Abschnitt (16) erstreckt sich schräg nach links nach hinten von dem Unter-Rahmen-Abschnitt (12) und biegt sich nach hinten, der rechte untere Rahmen-Abschnitt (17) ist rechts von dem Kopf-Rohr (11) positioniert, der rechte untere Rahmen-Abschnitt (17) ist mit dem unteren Abschnitt des Unter-Rahmen-Abschnitts (12) verbunden, der rechte untere Rahmen-Abschnitt (17) erstreckt sich schräg nach rechts nach hinten von dem Unter-Rahmen-Abschnitt (12) und biegt sich nach hinten.

## Revendications

1. Véhicule à enfourcher comportant :
un réservoir de carburant (35) ;
un tube frontal (11);
une partie de châssis descendante (12) s'étendant vers le bas à partir du tube frontal (11);
une partie de châssis arrière (13) disposée à l'arrière d'une extrémité avant de la partie de châssis descendante (12), la partie de châssis arrière (13) comprenant une partie de châssis inférieure (16, 17) et une partie de châssis de siège (18, 19), la partie de châssis inférieure (16, 17) s'étendant vers l'arrière à partir de la partie de châssis descendante (12) en un emplacement plus bas que le tube frontal (11), la partie de châssis de siège (18, 19) s'étendant vers l'arrière et vers le haut à partir de la partie de châssis inférieure (16, 17) ;
un siège (4) pour un conducteur, au moins une partie du siège (4) étant disposée au-dessus de la partie de châssis de siège (18, 19) ; et
une partie de raccord de châssis (14) s'étendant dans une direction avant/arrière du véhicule en un emplacement plus élevé que la partie de châssis inférieure (16, 17), la partie de raccord de châssis (14) raccordant la partie de châssis descendante (12) et la partie de châssis arrière (13), où
la partie de raccord de châssis (14) est en tôle et la partie de raccord de châssis (14) comprend une partie de plaque transversale (41) et une partie de plaque longitudinale (42, 43), la partie de plaque transversale (41) s'étendant dans la direction de la largeur du véhicule, la partie de plaque longitudinale (42, 43) s'étendant dans une direction de haut en bas, où
une partie formant une marche gauche (321) est disposée sur la gauche du tube frontal (11) et à un emplacement plus bas que la partie de raccord de châssis (14), au moins une partie de la partie formant la marche gauche (321) étant située entre une extrémité arrière du tube frontal (11) et une extrémité avant du siège (4) dans la direction avant/arrière du véhicule ;
une partie formant une marche droite (322) est disposée sur la droite du tube frontal (11) et à un emplacement plus bas que la partie de raccord de châssis (14), au moins une partie de la partie formant la marche droite (322) étant située entre une extrémité arrière du tube frontal (11) et une extrémité avant du siège (4) dans la direction avant/arrière du véhicule ;
une partie formant un tunnel central (33) disposée entre la partie formant la marche gauche (321) et la partie formant la marche droite (322) dans la direction de la largeur du véhicule, la partie formant le tunnel central (33) ayant une section transversale ayant une forme convexe bombée vers le haut, la partie formant le tunnel central (33) s'étendant dans la direction avant/arrière du véhicule, **caractérisé en ce que** le réservoir de carburant (35) est disposé sous la partie de raccord de châssis (14) à l'intérieur de la partie formant le tunnel central (33),
où
la partie de raccord de châssis (14) est disposée à l'intérieur de la partie formant le tunnel central (33), et, dans une vue en plan du véhicule, une dimension de la partie de raccord de châssis (14) dans la direction de la largeur du véhicule est plus petite qu'une dimension du réservoir de carburant (35) dans la direction de la largeur du véhicule.

2. Véhicule à enfourcher selon la revendication 1, **caractérisé en ce qu'**une dimension de la partie de plaque transversale (41) dans la direction de la largeur du véhicule est plus grande qu'une dimension de la partie de plaque longitudinale (42, 43) dans la direction de haut en bas.

3. Véhicule à enfourcher selon la revendication 1 ou 2, **caractérisé en ce que** la partie de raccord de châssis (14) comprend une première partie formant une jonction (141) reliée à la partie de châssis descendante (12), et une seconde partie formant une jonction (142) reliée à la partie de châssis arrière (13), où la partie de plaque transversale (41) comprend un corps transversal (46) situé entre la première partie formant une jonction (141) et la seconde partie formant une jonction (142), et
une dimension du corps transversal (46) dans la direction de la largeur du véhicule est différente de la dimension dans la direction de la largeur du véhicule de la première et/ou de la seconde partie formant une jonction (141, 142).

4. Véhicule à enfourcher selon la revendication 3, **caractérisé en ce que** le corps transversal (46) comprend des parties ayant des dimensions dans la direction de la largeur du véhicule différentes.

5. Véhicule à enfourcher selon la revendication 3 ou 4, **caractérisé en ce que** la partie de plaque longitudinale (42, 43) comprend un corps longitudinal (58, 68) situé entre la première partie formant une jonction (141) et la seconde partie formant une jonction (142), et
une dimension du corps longitudinal (58, 68) dans la direction de haut en bas est différente des dimensions dans la direction de haut en bas de la première et/ou de la seconde partie formant une jonction (141, 142).

6. Véhicule à enfourcher selon la revendication 5, **caractérisé en ce que** le corps longitudinal (58, 68) comprend des parties ayant des dimensions dans la direction de haut en bas différentes.

7. Véhicule à enfourcher selon l'une quelconque des revendications 1 à 6, **caractérisé en ce que** la partie de raccord de châssis (14) comprend un trou (44a, 45a, 46a, 46b, 46c, 53, 55).

8. Véhicule à enfourcher selon la revendication 7, **caractérisé en ce que** le trou est agencé dans la partie de plaque transversale (41) et/ou le trou est agencé dans la partie de plaque longitudinale (42, 43).

9. Véhicule à enfourcher selon la revendication 7 ou 8, **caractérisé en ce que** le trou (53, 55) présente une forme circulaire, ou le trou (53, 55) présente une forme allongée dans la direction avant/arrière du véhicule.

10. Véhicule à enfourcher selon l'une quelconque des revendications 7 à 9, **caractérisé en ce que** le trou (53) est pourvu d'une nervure (54) sur son bord.

11. Véhicule à enfourcher selon l'une quelconque des revendications 1 à 10, **caractérisé en ce que** dans une vue latérale du véhicule, la partie de raccord de châssis (14) est disposée de manière inclinée par rapport à la direction avant/arrière du véhicule.

12. Véhicule à enfourcher selon l'une quelconque des revendications 1 à 11, **caractérisé par** :
une partie formant un gousset (15) attaché entre le tube frontal (11) et la partie de châssis descendante (12),
où
la partie de raccord de châssis (14) est connectée à la partie de châssis descendante (12) en un emplacement plus élevé qu'une extrémité inférieure de la partie formant le gousset (15).

13. Véhicule à enfourcher selon l'une quelconque des revendications 1 à 12, **caractérisé en ce que** la partie de plaque transversale (41) comprend un trou (53),
le réservoir de carburant (35) comprend un corps de réservoir (73) comprenant un espace intérieur pour stocker un carburant, et
une partie formant un goulot de remplissage (75) faisant saillie vers le haut à partir du corps de réservoir (73), et
la partie formant le goulot de remplissage (75) est disposée dans le trou (53).

14. Véhicule à enfourcher selon l'une quelconque des revendications 1 à 13, **caractérisé en ce que** la partie de raccord de châssis (14) présente une section transversale de forme convexe recourbée vers le haut dans une vue en section transversale perpendiculaire à la direction avant/arrière du véhicule.

15. Véhicule à enfourcher selon l'une quelconque des revendications 1 à 14, **caractérisé en ce que** la partie de plaque longitudinale comprend une partie de plaque longitudinale gauche (42) s'étendant vers le bas à partir d'un bord latéral gauche de la partie de plaque transversale (41), et
une partie de plaque longitudinale droite (43) s'étendant vers le bas à partir d'un bord latéral droit de la partie de plaque transversale (41).

16. Véhicule à enfourcher selon l'une quelconque des revendications 1 à 15, **caractérisé en ce que** la partie de châssis de siège comprend une partie de châssis de siège gauche (18) disposée sur la gauche du tube frontal (11), et
une partie de châssis de siège droite (19) disposée sur la droite du tube frontal (11), et
la partie de châssis arrière (13) comprend un élément de connexion (20) connectant la partie de châssis de siège gauche (18) avec la partie de châssis de siège droite (19), et la partie de raccord de châssis (14) raccorde la partie de châssis descendante (12) à l'élément de connexion (20).

17. Véhicule à enfourcher selon l'une quelconque des revendications 1 à 16, **caractérisé en ce que** la partie de châssis inférieure comprend
une partie de châssis inférieure gauche (16) et une partie de châssis inférieure droite (17),
la partie de châssis inférieure gauche (16) est disposée sur la gauche du tube frontal (11), la partie de châssis inférieure gauche (16) est connectée à une partie inférieure de la partie de châssis descendante (12), la partie de châssis inférieure gauche (16) s'étend obliquement vers la gauche vers l'arrière à partir de la partie de châssis descendante (12) et est recourbée vers l'arrière, la partie de châssis inférieure droite (17) est disposée sur la droite du tube frontal (11), la partie de châssis inférieure droite (17) est connectée à la partie inférieure de la partie de châssis descendante (12), la partie de châssis inférieure droite (17) s'étend obliquement vers la droite vers l'arrière à partir de la partie de châssis descendante (12) et est recourbée vers l'arrière.
